# EUROPÄISCHE PATENTSCHRIFT

(11) **EP 0 428 648 B1**
(45) Veröffentlichungstag und Bekanntmachung des Hinweises auf die Patenterteilung: **03.08.1994**
(21) Anmeldenummer: 90906850.4
(22) Anmeldetag: 04.05.1990
(51) Int. Cl.: D01H 4/12

(54) **SPURLAGER FÜR DEN SCHAFT EINES SPINNROTORS**
STEP BEARING FOR THE SHAFT OF A SPINNING ROTOR
CRAPAUDINE POUR LA TIGE D'UN ROTOR DE FILAGE

(30) Priorität: 05.05.1989 DE 3914777
(43) Veröffentlichungstag der Anmeldung: 29.05.1991
(73) Patentinhaber: Rieter Ingolstadt Spinnereimaschinenbau AG, 85055 Ingolstadt (DE)
(72) Erfinder: HINI, Eugen, D-8073 Kösching (DE); BOCK, Erich, D-8071 Wettstetten (DE); GRIMM, Eberhard, D-8070 Ingolstadt (DE)
(74) Vertreter: Canzler, Rolf, Dipl.-Ing.
(86) Internationale Anmeldenummer: DE9000320
(87) Internationale Veröffentlichungsnummer: WO9013690

(56) Entgegenhaltungen:
- DE-A- 2 716 573
- DE-A- 2 833 134

## Beschreibung

Die Erfindung betrifft eine Offenend-Spinnvorrichtung gemäß dem Oberbegriff des Anspruches 1.

Aus der DE-A-2.317.306 und der DE-A-2.514.734 sind derartige Offenend-Spinnvorrichtungen mit einem Spurlager bekannt. Bei Offenend-Spinnvorrichtungen, bei denen sich der Schaft des Spinnrotors über eine drehbar angeordnete Kugel abstützt, muß gewährleistet sein, daß Schwingungen der Maschine auf die Kugel übertragen werden, damit diese zum Mitdrehen angeregt wird. Die DE-A-2.317.306 zeigt in Fig. 4 ein Spurlager, bei dem über den Schwinghalter 44 Schwingungen in axialer Richtung des Spinnrotors an die Kugel übertragen werden.

In der DE-A-2.514.734 erfolgt die Aufnahme der Kugel durch einen Bolzen, der durch Schlitze in stimmgabelähnliche Schwinger aufgeteilt ist, um Maschinenschwingungen auf die Kugel zu übertragen.

Beim Betrieb von Offenend-Spinnrotoren treten stoßartige axiale Schwingungen des Schaftes auf, die bei herkömmlichen Spurlagern einen hohen Verschleiß an den Berührungsflächen von Schaft und Kugel zur Folge haben. Zusätzlich kann der Spinnrotor an der Wandung seines Rotorgehäuses anlaufen und dieses beschädigen.

Es ist versucht worden, die Schwingungen des Schaftes mittels Federn zu dämpfen. Diese Lagerung hat den Nachteil, daß der Schaft in axialer Richtung nicht exakt positioniert werden kann, was zu einem unruhigen Lauf führt. Das Mitdrehen der Kugel ist nicht gewährleistet, so daß es zum Stillstand der Kugel kommt. Bei Verwendung von stimmgabelähnlichen Schwingern ist eine axiale Dämpfung des Rotorschaftes nicht möglich. Dies führt zu Beschädigungen der Spinnvorrichtung. Die vom Stand der Technik gezeigten Offenend-Spinnvorrichtungen können die beim Lauf von Spinnrotoren auftretenden axialen Schwingbewegungen und Stöße nicht günstig beeinflussen. Die gezeigten elastischen Abstützungen der Kugel sind dazu nicht geeignet. Die elastischen Lagerungen führen zum Stillstand der Kugel und damit zu Beschädigungen des Lagers.

Aufgabe der vorliegenden Erfindung ist es, eine Offenend-Spinnvorrichtung gemäß dem Oberbegriff des Anspruches 1 so auszubilden, daß die Nachteile des Standes der Technik vermieden werden.

Die Aufgabe wird erfindungsgemäß durch die Merkmale des Anspruches 1 gelöst.

Durch das Dazwischenschalten eines dämpfenden Elements zwischen der Kugel und deren maschinenseitigen Abstützung werden die axialen Schwingungen des Rotorschaftes gedämpft, so daß Schläge auf das Axiallager und damit der Verschleiß des Spurlagers und des Schaftendes beseitigt werden. Durch das Abdämpfen axialer Schläge wird weiterhin vermieden, daß der Rotor an der Wandung des Rotorgehäuses anlaufen kann. Mit der einfachen Anordnung eines Dämpfungselements zwischen der Kugel und deren maschinenseitigen Abstützung würde erreicht, daß die Schwingungen der Maschine so gedämpft werden, daß ein Mitdrehen der Kugel mit dem Schaft nicht gewährleistet ist. Es käme zum zeitweisen oder fortwährenden Stillstand der Kugel und einer damit verbundenen Schädigung von Schaft und Kugel. Die erfindungsgemäße Ausgestaltung des Spurlagers dämpft Stöße und Schwingungen bezüglich des Schaftes in axialer Richtung und gewährleistet trotzdem das Mitdrehen der Kugel sowie eine exakte axiale Positionierung des Spinnrotors. Dadurch, daß die Kugel in radialer Richtung mit der maschinenseitigen Abstützung so in Verbindung steht, daß die bezüglich des Schaftes radialen Schwingungen der Maschine z.B. über die Kalotte an die Kugel übertragen werden, ist gewährleistet, daß diese sicher mit dem Schaft mitdreht. Zum Anregen der Kugel genügen diese Schwingungen. Es wird eine gute axiale Dämpfung des Schaftes und eine gleichzeitige Anregung der Kugel erreicht. Die stoßartigen Schwingungen des Schaftes können mit dem erfindungsgemäßen Spurlager gedämpft werden. Ein Anlaufen des Spinnrotors am Deckel des Rotors und Beschädigungen des Spurlagers werden damit vermieden. Eine exakte axiale Positionierung des Spinnrotor ist möglich.

Durch die Lagerung der Kugel in eine Kalotte ist es besonders einfach, die Maschinenschwingungen, die die Kugel zum Drehen veranlassen, auf diese zu übertragen. Die Kugel kann sicher gehalten werden und die von der Kugel abgewandte Seite der Kalotte ergibt eine gute Anlagefläche für das Dämpfungselement.

Weitere vorteilhafte Ausgestaltungen der Erfindung werden in den Unteransprüchen beschrieben.

Die Erfindung wird nachstehend anhand von Zeichnungen näher erläutert. Es zeigen:
- Fig. 1: eine Seitenansicht einer erfindungsgemäßen Axiallagerung eines Spinnrotors;
- Fig. 2: eine erfindungsgemäße Ausgestaltung eines Spurlagers;
- Fig. 3: ein erfindungsgemäßes Ausführungsbeispiel eines Trägerelementes; und
- Fig. 4 bis 7: weitere Ausbildungsbeispiele der erfindungsgemäßen Vorrichtung.

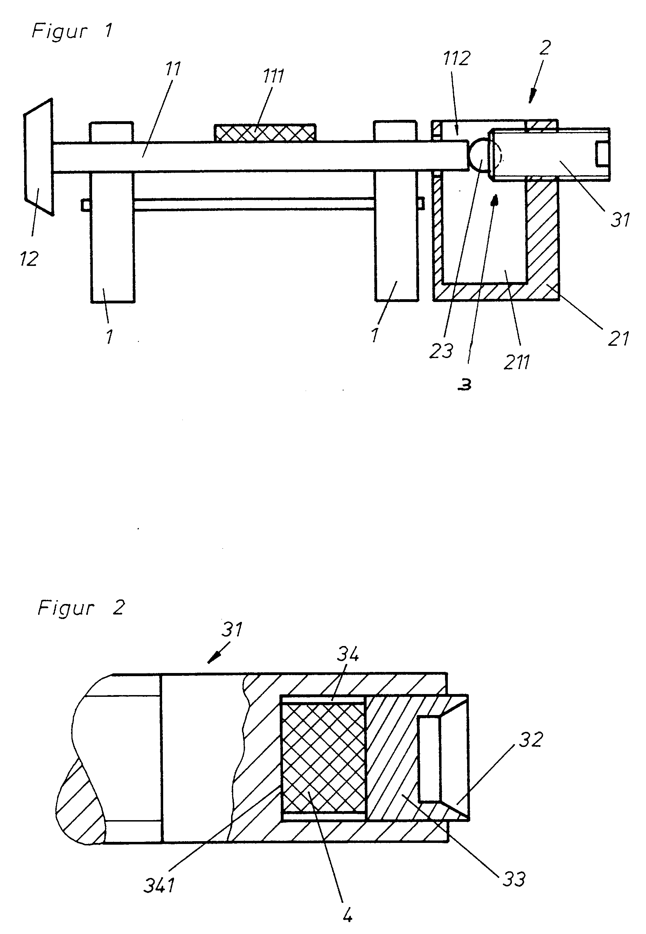

Figur 1 zeigt einen im Keilspalt von Stützscheiben 1 gelagerten Schaft 11 eines Spinnrotors 12. Der Schaft 11 wird mittels eines Tangentialriemens 111 angetrieben. Infolge der Schränkung der Stützscheiben wirkt auf den Schaft 11 in Richtung seines freien Endes 112 eine Kraft, die von einem Spurlager 2 aufgenommen wird. Dieses besteht aus dem Lagergehäuse 21, in das die Stellschraube 31, die die maschinenseitige Abstützung 3 der Kugel 23 bildet, eingesetzt ist. Die Kugel 23 nimmt die auf den Schaft 11 wirkenden axialen Kräfte auf. Sie wird in bekannter Weise mittels eines nichtgezeigten Dochtes, der in das mit Schmiermittel angefüllte Schmiermittelgehäuse 211 hineinreicht, benetzt. Durch einen geringen Versatz der Schaftachse zur Kugel wird diese zum Mitdrehen veranlaßt, wobei deren Drehzahl weit unter der des Schaftes 11 liegt.

Die vorliegende Erfindung ist nicht auf die gezeigte Art der Lagerung und des Antriebs des Spinnrotors 12 begrenzt. Diese ist auch anwendbar, beispielsweise bei einem Antrieb des Schaftes mittels einer Reibscheibe, die z.B. von einem Elektromotor angetrieben wird. Ebenso bei Lagerungen des Schaftes mittels Fluidlagern und auch bei Lagerungen, bei denen der Axialschub des Schaftes über andere Maßnahmen, z.B. Schwerkraft, erzielt wird.

Figur 2 zeigt eine erfindungsgemäße Ausgestaltung des Spurlagers, bei der die Kalotte 32 Bestandteil des Trägerelements 33 ist. Dieses ist in der Bohrung 34 der Stellschraube 31 angeordnet. Zwischen dem Trägerelement 33 und dem Boden 341 der Bohrung 34 ist ein Dämpfungselement 4 angeordnet. Dieses besteht in Fig. 2 aus einem gummiartigen Material, das gute Dämpfungseigenschaften besitzt und die durch das Trägerelement 33 übertragenen, axialen Schwingungen des Schaftes 11 dämpft. Das Dämpfungselement 4 ist in der Bohrung 34 mit radialem Spiel eingebaut, damit Verformungen des gummiartigen Materials in axialer Richtung durch Verformungen in radialer Richtung ausgeglichen werden können.

Das Dämpfungselement 4 ist an seiner Berührungsfläche mit dem Trägerelement 33 auf dieses vulkanisiert. Auf den Boden 341 der Bohrung 34 ist es aufgeklebt. Beide Fügeverfahren sind ja nach Bedarf untereinander austauschbar. Durch die Fixierung der einzelnen Bauteile wird erreicht, daß ein Mitdrehen der Kalotte 32 mit der Kugel 23 vermieden wird.

Der Durchmesser der Bohrung 34 und der Durchmesser des Trägerelements 33 sind so aufeinander abgestimmt, daß eine axiale Beweglichkeit des Trägerelements 33 noch gewährleistet bleibt und trotzdem Maschinenschwingungen an die Kalotte 32 übertragen werden können, weil radial das Trägerelement 33 mindestens teilweise durch Berührung mit der Wandung der Bohrung in Verbindung steht. Ein ständiges Anliegen auf der gesamten Fläche ist nicht notwendig. Es muß jedoch gewährleistet sein, daß mindestens ein Teil der Oberfläche ungedämpft berührt oder die Oberfläche mindestens zeitlich teilweise die Wandung ungedämpft berührt. Von den beiden zusammenarbeitenden metallischen Flächen ist mindestens eine vernickelt. Es können auch andere Beschichtungen zur Verhinderung von Passungsrost verwendet werden. Um zu verhindern, daß sich das Trägerelement 33 bei seiner Bewegung verklemmt, muß es eine genügende axiale Ausdehnung im Verhältnis zu seinem Durchmesser besitzen.

Durch die Anordnung in einer Bohrung der Stellschraube 31 kann die Kalotte 32 zusammen mit der Kugel 23 axial exakt positioniert werden, um den Spinnrotor 12 axial einzustellen.

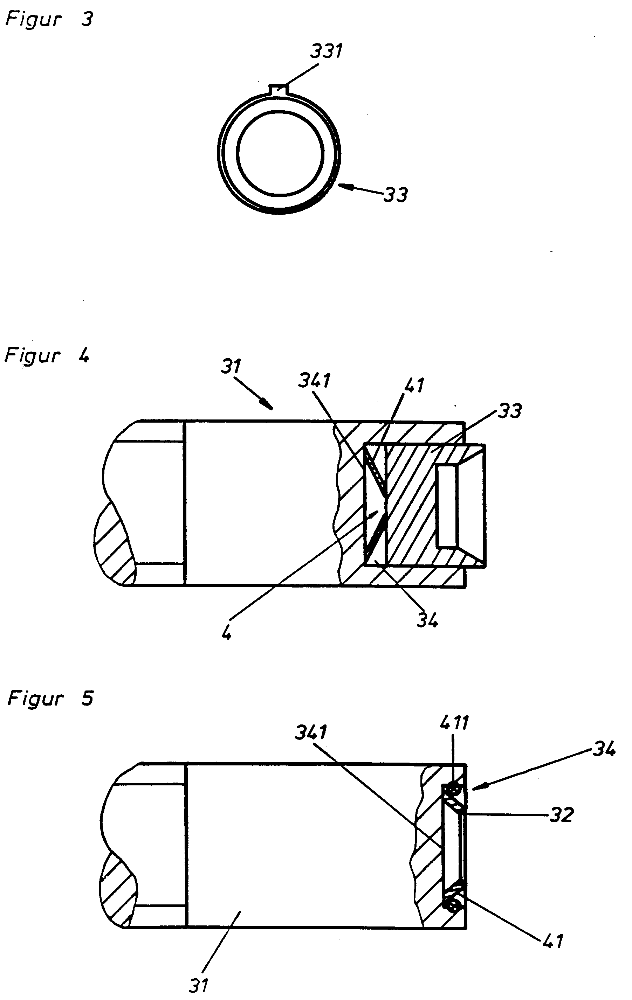

Figur 3 zeigt ein Trägerelement 33 mit einem Ansatz 331. Dieser arbeitet mit einer Nut der Wandung der Bohrung der maschinenseitigen Abstützung zusammen, wodurch ein Verdrehen und Mitdrehen der Kalotte 32 verhindert wird.

Figur 4 stellt eine Stellschraube 31 dar, die als Dämpfungselement 4 eine kegelstumpfartige Ringscheibe 41 besitzt, die in der Bohrung 34 der Stellschraube 31 angeordnet ist und das Trägerelement 33 axial dämpfend abstützt. Die Ausgestaltung des Trägerelements 33 entspricht der bei Figur 2 beschriebenen. Die Ringscheibe 41 ist kegelförmig ausgestaltet. Die Auflagenflächen der Ringscheibe 41 am Boden 341 und am Trägerelement 33 sind parallel zu diesen Flächen ausgestaltet, so daß die Auflagefläche möglichst groß ist. Die Dämpfung ergibt sich infolge Gleitreibung, die zwischen Ringscheibe und ihren Auflageflächen beim Verformen der Ringscheibe entsteht. Die Berührungsflächen der Ringscheibe 41 sind zur Vermeidung von Verschleiß gehärtet, ebenso wie der Boden 341 und das Trägerelement 33. Die Ringscheibe 41 hat an ihrem Außenumfang in der Bohrung 34 Spiel, damit sie sich verformen kann. Die Schwingungen der Maschine werden über das Trägerelement 33 an die Kugel 23 übertragen.

Bei der in Fig. 5 gezeigten Ausführung ist an der dem Spinnrotor zugewandten Seite die kegelförmige Ringscheibe 41 zu einer Kalotte 32 für die Aufnahme der Kugel 23 ausgestaltet. Die Ringscheibe 41 liegt mit ihrem Umfang in Nähe des Bodens 341 an der Wandung der Bohrung 34 an, so daß die Schwingungen der Maschine an die Kugel übertragen werden können. Um die notwendige Verformung zu verbessern, ist die Mantellinie geschlitzt. Es ist auch möglich mehrere Schlitze auf der Mantelfläche des Kegels anzubringen. Es darf dabei nur einer durchgängig ausgebildet sein, da sonst die notwendige Einteiligkeit verlorengeht. Die ringförmige Kalotte wird durch einen Schlitz sichelförmig, durch mehrere Schlitze in Kreisringsegmente aufgeteilt. Die Berührungsflächen sind gehärtet, um den Verschleiß zu verringern. Zur Fixierung der Ringscheibe 41 ist ein O-Ring 411, der in einer Nut der Wandung der Bohrung 34 angeordnet ist.

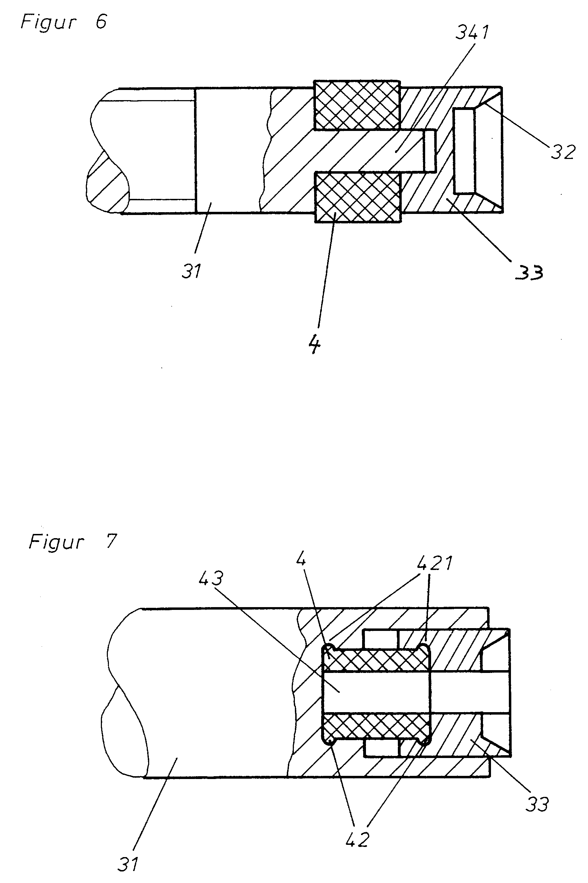

Figur 6 zeigt eine Stellschraube 31, die an Stelle einer Bohrung einen Dorn 341 aufweist, auf dem ein rohrförmiges Dämpfungselement 4 und Trägerelement 33 angeordnet ist. Zwischen dem Dorn 341 und dem Trägerelement 33 ist in axialer Richtung Spiel, dessen Größe die axiale Beweglichkeit der Kalotte 32 begrenzt, da der Dorn 341 einen Anschlag für das Trägerelement 33 bildet.

In Figur 7 ist eine erfindungsgemäße Ausführungsform eines Spurlagers gezeigt, bei der das Dämpfungselement 4 zwei druckknopfartige Wülste 42 aufweist, die mit radialen Nuten 421 der Stellschraube 31 und des Trägerelements 33 axial fixierend zusammenarbeiten. Das Dämpfungselement 4 besitzt eine Aussparung 43. Dadurch wird erreicht, daß sich dieses verformen kann. Die Verformbarkeit des Dämpfungselementes 4 nach außen ist begrenzt, da die Wülste 42 wenig Spiel in den Nuten 421 haben. Infolge der Aussparung 43 kann eine Verformung radial nach innen erfolgen.

## Patentansprüche

1. Offenend-Spinnvorrichtung mit einem Spinnrotor, dessen Schaft sich axial an einer Kugel eines Spurlagers abstützt, dadurch gekennzeichnet, daß die Kugel (23) bezüglich des Schaftes axial gedämpft und radial ungedämpft mit der maschinenseitigen Abstützung (3) in Verbindung steht.

2. Offenend-Spinnvorrichtung nach Anspruch 1, dadurch gekennzeichnet, daß zwischen der Kugel (23) und deren maschinenseitiger Abstützung ein Dämpfungselement (4) angeordnet ist.

3. Offenend-Spinnvorrichtung nach Anspruch 1 oder 2, dadurch gekennzeichnet, daß die Kugel (23) in einer Kalotte (32) gelagert ist.

4. Offenend-Spinnvorrichtung nach einem oder mehreren der Ansprüche 2 oder 3, dadurch gekennzeichnet, daß die maschinenseitige Abstützung (3) eine Bohrung (34) zur Aufnahme eines Dämpfungselementes (4, 41) besitzt.

5. Offenend-Spinnvorrichtung nach einem oder mehreren der Ansprüche 1 bis 4, dadurch gekennzeichnet, daß die maschinenseitige Abstützung (3) als Stellschraube (31) ausgebildet ist.

6. Offenend-Spinnvorrichtung nach einem oder mehreren der Ansprüche 2 bis 5, dadurch gekennzeichnet, daß das Dämpfungselement (4) aus einem gummiartigen Material besteht.

7. Offenend-Spinnvorrichtung nach einem oder mehreren der Ansprüche 2 bis 5, dadurch gekennzeichnet, daß das Dämpfungselement (4) als gehärtete Ringscheibe (41) ausgebildet ist.

8. Offenend-Spinnvorrichtung nach Anspruch 7, dadurch gekennzeichnet, daß die Ringscheibe (41) eine kegelstumpfartige Kontur aufweist.

9. Offenend-Spinnvorrichtung nach einem oder mehreren der Ansprüche 3 bis 8, dadurch gekennzeichnet, daß die Kalotte (32) auf einem Trägerelement (33) angeordnet ist.

10. Offenend-Spinnvorrichtung nach Anspruch 9, dadurch gekennzeichnet, daß das Trägerelement (33) mindestens teilweise in der Bohrung (34) der maschinenseitigen Abstützung (3) eingesetzt ist.

11. Offenend-Spinnvorrichtung nach Anspruch 9 oder 10, dadurch gekennzeichnet, daß das Trägerelement (33) mit kleinem radialen Spiel in der Bohrung (34) der maschinenseitigen Abstützung (3) angeordnet ist.

12. Offenend-Spinnvorrichtung nach einem oder mehreren der Ansprüche 2 bis 11, dadurch gekennzeichnet, daß das Dämpfungselement (4) mit der maschinenseitigen Abstützung (3) verbunden ist.

13. Offenend-Spinnvorrichtung nach einem oder mehreren der Ansprüche 9 bis 12, dadurch gekennzeichnet, daß das Trägerelement (33) mit dem Dämpfungselement (4) verbunden ist.

14. Offenend-Spinnvorrichtung nach Anspruch 12 und/oder 13, dadurch gekennzeichnet, daß die Verbindung durch Kleben oder Vulkanisieren erfolgt.

15. Offenend-Spinnvorrichtung nach Anspruch 12 und/oder 13, dadurch gekennzeichnet, daß die Verbindung in einer Ebene erfolgt, die im wesentlichen senkrecht zur Achse des Schafts (11) liegt.

16. Offenend-Spinnvorrichtung nach Anspruch 12 und/oder 13, dadurch gekennzeichnet, daß die Verbindung über eine druckknopfartige, formschlüssige Ausgestaltung von Dämpfungselement (4), Trägerelement (33) und maschinenseitiger Abstützung (3) erfolgt.

17. Offenend-Spinnvorrichtung nach einem oder mehreren der Ansprüche 9 bis 16, dadurch gekennzeichnet, daß die Bewegung des Trägerelements (33) in axialer Richtung begrenzt ist.

18. Offenend-Spinnvorrichtung nach einem oder mehreren der Ansprüche 9 bis 17, dadurch gekennzeichnet, daß das Trägerelement (33) und/oder die maschinenseitige Abstützung (3) beschichtet ist.

19. Offenend-Spinnvorrichtung nach Anspruch 18, dadurch gekennzeichnet, daß das Trägerelement (33) vernickelt ist.

20. Offenend-Spinnvorrichtung nach einem oder mehreren der Ansprüche 6 bis 19, dadurch gekennzeichnet, daß die Ringscheibe (41) auf der der Kugel (23) zugewandten Seite zu einer Kalotte (32) zur Aufnahme der Kugel (23) ausgebildet ist und die Ringscheibe (41) in radialer Richtung geschlitzt ist.

21. Offenend-Spinnvorrichtung nach einem oder mehreren der Ansprüche 3 bis 20, dadurch gekennzeichnet, daß die Bewegung der Kalotte (32) in axialer Richtung begrenzt ist.

22. Offenend-Spinnvorrichtung nach Anspruch 21, dadurch gekennzeichnet, daß die Begrenzung der Bewegung durch einen Anschlag (35) des Trägerelements (33) an der maschinenseitigen Abstützung (3) erfolgt.

23. Offenend-Spinnvorrichtung nach einem oder mehreren der Ansprüche 2 bis 22, dadurch gekennzeichnet, daß das Dämpfungselement (4) in Richtung der durch Belastung erfolgenden radialen Verformung mit Spiel in seiner Aufnahme angeordnet ist.

24. Offenend-Spinnvorrichtung nach Anspruch 20, dadurch gekennzeichnet, daß die Ringscheibe (41) in der Bohrung (34) der maschinenseitigen Abstützung (4) mittels eines O-ringartigen Halterings (411) gehalten ist.

25. Offenend-Spinnvorrichtung nach einem oder mehreren der Ansprüche 3 bis 24, dadurch gekennzeichnet, daß die Kalotte (32) gegen Mitdrehen gesichert ist.

26. Offenend-Spinnvorrichtung nach Anspruch 25, dadurch gekennzeichnet, daß das Trägerelement (33) axial formschlüssig mit der Wandung der Bohrung (34) der maschinenseitigen Abstützung (3) zusammenarbeitet.

## Claims

1. Open-end spinning apparatus having a spinning rotor whereof the shaft is supported axially on a ball of a locating bearing, characterized in that the ball (23) is connected to the support (3) on the machine side in a manner which is axially damped and radially undamped with respect to the shaft.

2. Open-end spinning apparatus according to Claim 1, characterized in that a damping element (4) is arranged between the ball (23) and the support thereof on the machine side.

3. Open-end spinning apparatus according to Claim 1 or 2, characterized in that the ball (23) is mounted in a socket (32).

4. Open-end spinning apparatus according to one or more of Claims 2 or 3, characterized in that the support (3) on the machine side has a bore (34) for receiving a damping element (4, 41).

5. Open-end spinning apparatus according to one or more of Claims 1 to 4, characterized in that the support (3) on the machine side is constructed as a setscrew (31).

6. Open-end spinning apparatus according to one or more of Claims 2 to 5, characterized in that the damping element (4) is of a rubber-type material.

7. Open-end spinning apparatus according to one or more of Claims 2 to 5, characterized in that the damping element (4) is constructed as a hardened annular plate (41).

8. Open-end spinning apparatus according to Claim 7, characterized in that the annular plate (41) has a frustoconical contour.

9. Open-end spinning apparatus according to one or more of Claims 3 to 8, characterized in that the socket (32) is arranged on a bearer (33).

10. Open-end spinning apparatus according to Claim 9, characterized in that the bearer (33) is inserted at least partially in the bore (34) of the support (3) on the machine side.

11. Open-end spinning apparatus according to Claim 9 or 10, characterized in that the bearer (33) is arranged in the bore (34) of the support (3) on the machine side with a small amount of radial play.

12. Open-end spinning apparatus according to one or more of Claims 2 to 11, characterized in that the damping element (4) is connected to the support (3) on the machine side.

13. Open-end spinning apparatus according to one or more of Claims 9 to 12, characterized in that the bearer (33) is connected to the damping element (4).

14. Open-end spinning apparatus according to Claim 12 and/or 13, characterized in that the connection is made by adhesion or vulcanization.

15. Open-end spinning apparatus according to Claim 12 and/or 13, characterized in that the connection is made in a plane which lies substantially perpendicular to the axis of the shaft (11).

16. Open-end spinning apparatus according to Claim 12 and/or 13, characterized in that the connection is made by way of a form-fitting construction, in the manner of a press stud, comprising the damping element (4), the bearer (33) and the support (3) on the machine side.

17. Open-end spinning apparatus according to one or more of Claims 9 to 16, characterized in that the movement of the bearer (33) in the axial direction is restricted.

18. Open-end spinning apparatus according to one or more of Claims 9 to 17, characterized in that the bearer (33) and/or the support (3) on the machine side is coated.

19. Open-end spinning apparatus according to Claim 18, characterized in that the bearer (33) is nickel-plated.

20. Open-end spinning apparatus according to one or more of Claims 6 to 19, characterized in that the annular plate (41) is constructed on the side facing the ball (23) to form a socket (32) for receiving the ball (23) and the annular plate (41) is slotted in the radial direction.

21. Open-end spinning apparatus according to one or more of Claims 3 to 20, characterized in that the movement of the socket (32) in the axial direction is restricted.

22. Open-end spinning apparatus according to Claim 21, characterized in that the movement is restricted by a stop (35) of the bearer (33) against the support (3) on the machine side.

23. Open-end spinning apparatus according to one or more of Claims 2 to 22, characterized in that the damping element (4) is arranged with play in its receiver in the direction of the radial deformation produced by load.

24. Open-end spinning apparatus according to Claim 20, characterized in that the annular plate (41) is held in the bore (34) of the support (4) on the machine side by means of a holding ring (411) of the O-ring type.

25. Open-end spinning apparatus according to one or more of Claims 3 to 24, characterized in that the socket (32) is prevented from being entrained in rotation.

26. Open-end spinning apparatus according to Claim 25, characterized in that the bearer (33) co-operates with the wall of the bore (34) of the support (3) on the machine side with axial form fit.

## Revendications

1. Dispositif de filature à fibres libérées, comportant un rotor de filature dont l'arbre s'appuie axialement sur une boule d'une crapaudine, dispositif caractérisé en ce que la boule (23) est en liaison avec amortissement axial avec l'arbre et est en liaison sans amortissement radial avec le support (3) du côté machine.

2. Dispositif de filature à fibres libérées selon la revendication 1, caractérisé en ce qu'un élément d'amortissement (4) est disposé entre la boule (23) et son support du côté machine.

3. Dispositif de filature à fibres libérées selon la revendication 1 ou 2, caractérisé en ce que la boule (23) est montée dans une calotte (32).

4. Dispositif de filature à fibres libérées selon une ou plusieurs des revendications 2 ou 3, dispositif caractérisé en ce que le support (3) du côté de la machine comporte un alésage (34) destiné à loger un élément d'amortissement (4, 41).

5. Dispositif de filature à fibres libérées selon une ou plusieurs des revendications 1 à 4, caractérisé en ce que le support (3) du côté machine est conformé en vis (31) de réglage.

6. Dispositif de filature à fibres libérées selon une ou plusieurs des revendications 2 à 5, caractérisé en ce que l'élément d'amortissement (4) consiste en un matériau du genre caoutchouc.

7. Dispositif de filature à fibres libérées selon une ou plusieurs des revendications 2 à 5, caractérisé en ce que l'élément d'amortissement (4) est réalisé sous forme d'un disque annulaire (41) durci.

8. Dispositif de filature à fibres libérées selon la revendication 7, caractérisé en ce que le disque annulaire (41) présente un contour tronconique.

9. Dispositif de filature à fibres libérées selon une ou plusieurs des revendications 3 à 8, caractérisé en ce que la calotte (32) est disposée sur un élément (33) de support.

10. Dispositif de filature à fibres libérées selon la revendication 9, caractérisé en ce que l'élément de support (33) est introduit au moins partiellement dans l'alésage (34) du support (3) du côté machine.

11. Dispositif de filature à fibres libérées selon la revendication 9 ou 10, caractérisé en ce que l'élément de support (33) est disposé avec un petit jeu radial dans l'alésage (34) du support (3) du côté machine.

12. Dispositif de filature à fibres libérées selon une ou plusieurs des revendications 2 à 11, caractérisé en ce que l'élément (4) d'amortissement est lié au support (3) du côté machine.

13. Dispositif de filature à fibres libérées selon une ou plusieurs des revendications 9 à 12, caractérisé en ce que l'élément de support (33) est lié à l'élément (4) d'amortissement.

14. Dispositif de filature à fibres libérées selon la revendication 12 et/ou 13, caractérisé en ce que la liaison a lieu par collage ou vulcanisation.

15. Dispositif de filature à fibres libérées selon la revendication 12 et/ou 13, caractérisé en ce que la liaison a lieu dans un plan qui est essentiellement perpendiculaire à l'axe de l'arbre (11).

16. Dispositif de filature à fibres libérées selon la revendication 12 et/ou 13, caractérisé en ce que la liaison est réalisée à l'aide d'une conformation du genre bouton de poussée avec verrouillage par concordance de forme entre l'élément d'amortissement (4), l'élément de support (33) et le support (3) du côté machine.

17. Dispositif de filature à fibres libérées selon une ou plusieurs des revendications 9 à 16, caractérisé en ce que le mouvement de l'élément (33) de support est limité en direction axiale.

18. Dispositif de filature à fibres libérées selon une ou plusieurs des revendications 9 à 17, caractérisé en ce que l'élément (33) de support et/ou le support (3) du côté machine comporte(nt) un revêtement.

19. Dispositif de filature à fibres libérées selon la revendication 18, caractérisé en ce que l'élément de support (33) est nickelé.

20. Dispositif de filature à fibres libérées selon une ou plusieurs des revendications 6 à 19, caractérisé en ce que le disque annulaire (41) a, du côté tourné vers la boule (23), la conformation d'une calotte (32) destinée à loger la boule (23), et en ce que le disque annulaire ou rondelle (41) est fendu en direction radiale.

21. Dispositif de filature à fibres libérées selon une ou plusieurs des revendications 3 à 20, caractérisé en ce que le déplacement de la calotte (32) est limité en direction axiale.

22. Dispositif de filature à fibres libérées selon la revendication 21, caractérisé en ce que la limitation du déplacement est obtenue par une butée (35) de l'élément de support (33) sur le support (3) du côté machine.

23. Dispositif de filature à fibres libérées selon une ou plusieurs des revendications 2 à 22, caractérisé en ce que l'élément d'amortissement (4) est monté dans son logement avec du jeu en direction de la déformation radiale se produisant sous charge.

24. Dispositif de filature à fibres libérées selon la revendication 20, caractérisé en ce que le disque annulaire (41) est maintenu dans l'alésage (34) du support (4) du côté machine par un anneau de blocage (411) du genre bague torique.

25. Dispositif de filature à fibres libérées selon une ou plusieurs des revendications 3 à 24, caractérisé en ce que la calotte (32) est empêchée d'être entraînée en rotation.

26. Dispositif de filature à fibres libérées selon la revendication 25, caractérisé en ce que l'élément de support (33) coopère, par blocage axial avec concordance des formes, avec la paroi de l'alésage (34) du support (3) du côté machine.
